# EUROPEAN PATENT APPLICATION

(11) **EP 4 488 967 A1**
(43) Date of publication of application: **08.01.2025**
(21) Application number: 24186328.1
(22) Date of filing: 03.07.2024
(51) Int. Cl.: G07C 5/00, G07C 5/08

(54) **VEHICLE UNIT CONFIGURATION**

(30) Priority: 07.07.2023 SE 2350881
(71) Applicant: Stoneridge Electronics AB, 169 73 Solna (SE)
(72) Inventor: WECK, Björn, 169 73 SOLNA (SE); HALLBERG, Sanna, 169 73 SOLNA (SE); ELLINGSSON, Tomas, 191 40 SOLLENTUNA (SE)
(74) Representative: Bergenstråhle & Partners AB

(57) **Abstract**

Described is among other things a method performed by a vehicle unit (10), the vehicle unit (10) is communicatively connected to a network entity (20), the method comprises transmitting (202) configuration information of the vehicle unit (10) to the network entity (20).

## Description

### Technical Field

The present disclosure relates generally to methods and vehicle units for recording information.

### Background

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g. dangerous goods, livestock or refrigerated food etc. Therefore, most vehicles, such as lorry trucks, carry a vehicle unit to measure, store and possible also report the collected data. In this document, the term "vehicle unit" shall mean a digital unit capable of gathering information relating to the vehicle. Examples of such information may be a geographical location, driving hours, distance travelled, start time, finish time, rest time, driver name, starting location and finishing location, exhaust measurements, fuel consumption, temperature data from vehicle or cargo sensors, opening and closing of cargo doors or operation of other vehicle systems, e.g. cranes and lifts etc. Such information, in this document also known as vehicle related information data, vehicle information data or vehicle information, can further be driving video, driver identity, speed information, position information, time information, environment information, etc. One example of a vehicle unit is a digital tachograph, capable of recording and digitally compiling and storing the vehicle data including driving times and rest periods as well as periods of other work and availability taken by the driver of a heavy vehicle. Under EU legislation it is mandatory to install digital tachographs in vehicles having a mass of more than 3,5 tons. In USA, similar rules exists, relating to an Electronic Logging Device (ELD) with the purpose of recording the driver's duty and vehicle speed in order to ensure the driver is compliant with the driving hours' legislation or the working time directive or similar legislation stipulated by authorities.

The vehicle unit is normally located in the cabin of the vehicle, where the vehicle unit is arranged in the instrument board, so that the vehicle operator may operate the vehicle unit in adjacency to start or stop of a journey. In order to calculate and estimate the speed and the travel distance, or other parameters for instance as listed above, of the vehicle, the vehicle unit is connected to one or more sensors, where the sensors are capable of measuring, for instance, the motion of the wheels or other parameters. For this purpose, a motion sensor is attached to the gearbox of the vehicle to receive pulses, i.e. speed and movement information, which is sent to the tachograph.

The functionality and also the use of the data recorded in the vehicle unit and the vehicle unit is constantly developing. Hence there is a need for an improved vehicle unit and methods relating thereto. Configuration of vehicle units such as tachographs are currently done through external units locally in the vehicle, at workshops. Updating the tachographs, requires planning, is time consuming and reduces efficiency as well as it and provides challenges with respect to keeping the vehicle units up to date with any changes in legislation.

### Summary

It is an object of the invention to address at least some of the problems and issues outlined above. It is an object of embodiments of the invention to improve the functionality of the vehicle unit. It is another object of embodiments of the invention to manage the vehicle unit configuration information in a better way. It is possible to achieve one or more of these objects and possibly others by using methods and vehicle units as defined in the attached independent claims.

As has been realized, configuration of a vehicle unit can be made more efficient and user friendly by enabling sharing of configuration information, configuration and re-configuration of the vehicle unit via a network entity. Hereby configuration of a vehicle unit can be made at any location and also multiple vehicle units associated with multiple vehicles can be configured at the same time so that for example multiple vehicles of a fleet of vehicles have the same configuration of the vehicle unit at the same time.

In a first aspect of the disclosure there is provided a method performed by a vehicle unit such as a tachograph. The vehicle unit can be communicatively connected to a network entity. The method comprises to transmit the configuration information of the vehicle unit to the network entity. Hereby the network entity is enabled to keep track of the configuration information of the vehicle unit and is further enabled to share the information configuration with other vehicle units that the network entity can connect to.

In accordance with one embodiment, the method further comprises to receive updated configuration information of the vehicle unit from the network entity and to update the configuration of the vehicle unit based on the received configuration information. Hereby a vehicle unit can be re-configured via a network entity.

In accordance with some embodiments, when the vehicle device is a tachograph, the configuration information of the vehicle unit can comprise recording frequency, displaying sequence, and/or user configuration.

In accordance with one embodiment, the method can further comprise receiving updated configuration information of the vehicle unit from a local device and updating the configuration of the vehicle unit based on the received configuration information. The updated configuration information can then be transmitted to the network entity.

In accordance with another aspect of the invention a vehicle unit is communicatively connectable to a network entity. The vehicle unit comprises a processing circuitry and a memory. The memory contains instructions executable by the processing circuitry, whereby the vehicle unit is operative for transmitting configuration information of the vehicle unit to the network entity.

In accordance with one embodiment, the vehicle unit is further operative for: receiving updated configuration information of the vehicle unit from the network entity; and updating the configuration of the vehicle unit based on the received configuration information.

In accordance with one embodiment, the vehicle unit is further operative for receiving updated configuration information of the vehicle unit from a local device; updating the configuration of the vehicle unit based on the received configuration information; and transmitting the updated configuration information to the network entity.

In accordance with yet another aspect of the invention, a computer program comprising instructions, which, when executed by a processing circuitry of a vehicle unit, causes the vehicle unit to perform the method according to the above.

In accordance with a further another aspect of the invention, a carrier containing the computer program according to the above is provided. The carrier can be one of an electronic signal, an optical signal, a radio signal, an electric signal, or a computer readable storage medium.

In accordance with a further aspect of the invention, a vehicle is provided, the vehicle comprising at least one vehicle unit according to any one of the above embodiments.

### Brief Description of Drawings

The invention is now described, by way of example, with reference to the accompanying drawings, in which:
Fig. 1a and 1b schematically show a vehicle and a vehicle unit, according to possible embodiments.
Fig. 2 schematically shows the method performed by the vehicle unit, according to possible embodiments, and
Fig. 3 schematically shows a vehicle unit.

### Detailed Description

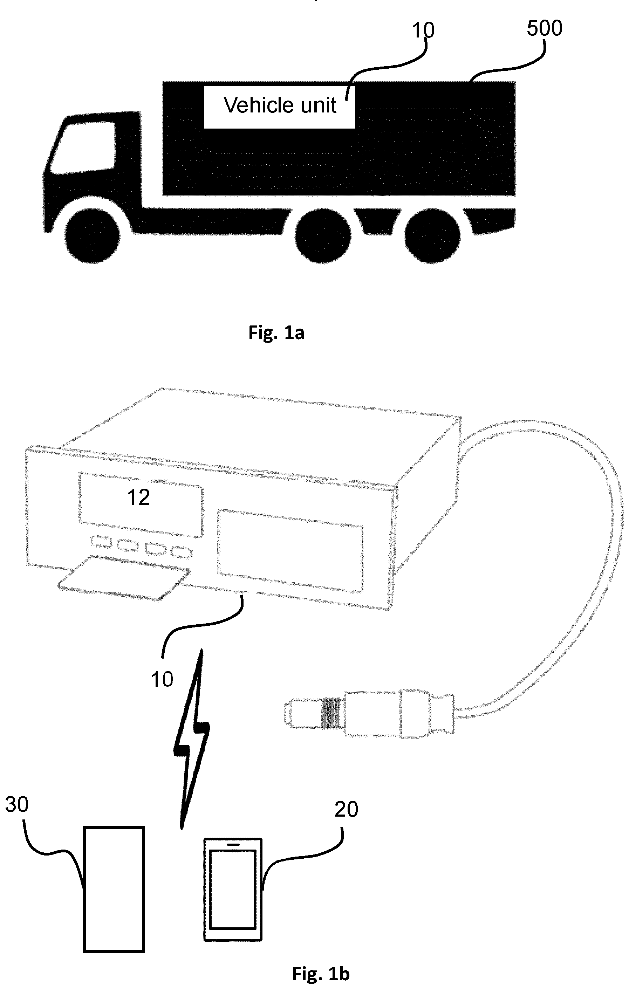

Referring to fig. 1a, a vehicle 500 can be equipped with a vehicle unit 10. The vehicle 500 can be any kind of vehicle, e.g., car, truck, bus, etc. The vehicle unit 10 can be a tachograph or some other similar device used on-board a vehicle to record data and operative for recording vehicle information data.

Referring to fig. 1b, the vehicle unit 10 may comprise a display unit 12, e.g., a screen. However, the size of the display unit 12 is limited and may not able to display all the vehicle information data recorded by the vehicle unit 10. Therefore, the vehicle unit 10 is communicatively connected to a network entity 20, and send the recorded vehicle information data to the network entity 20, so that a user can access the vehicle information data via the network entity 20. The network entity 20 can for example be a server or a mobile computer device such as a mobile phone or a laptop or a similar device.

Also, the vehicle unit can also send and receive configuration information for the vehicle unit 10 to/from the network entity. Configuration information can for example be data used to determine the settings of the user interface such as the display unit 12 so as to configure the view on the display 12. The configuration information can also be data used to determine what parameters to record at what time and at what frequency. The configuration information can also comprise threshold values that determines warnings and can trigger different types of recordings. For example, the driver can be alerted that it is time to rest to comply with local legislation or a recording can be triggered by some parameter such as temperature or similar. According to one embodiment, configuration information comprises background illumination of the display. According to one embodiment, configuration data comprises personalized menu structures, e.g. in what order menu items are shown.

The vehicle unit 10 can also be operatively connected to one or a plurality of other vehicle devices 30. The other vehicle devices 30 can for example be a local device configured to provide re-configuration data and software updates to the vehicle unit. For example, the local device 30 can be a vehicle workshop updating device used at the local vehicle workshop to update and reconfigure the vehicle device or some similar device that can connect directly to the vehicle device via some wireless or wireline connector.

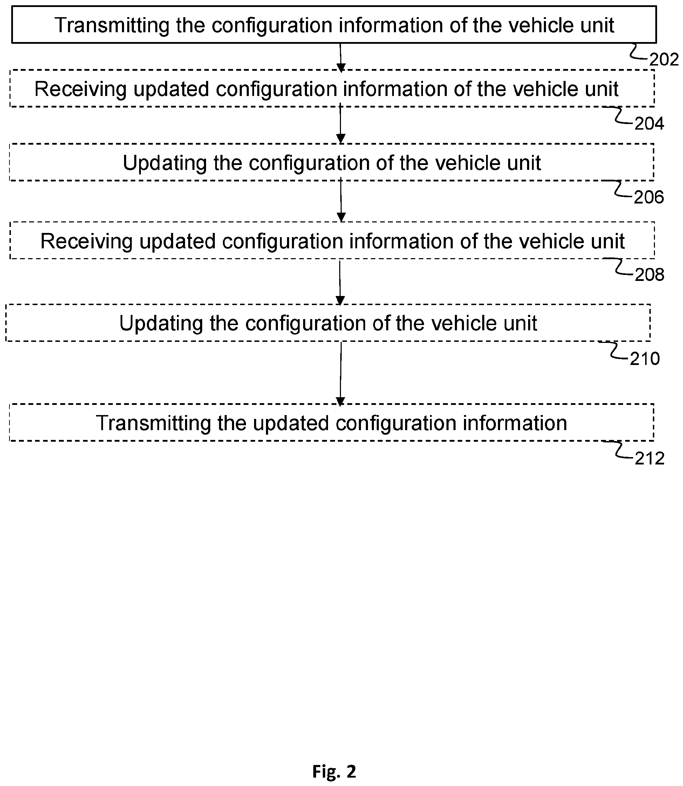

Referring to fig. 2, some steps of a method performed by a vehicle unit 10 are depicted. The vehicle unit can be communicatively connected to the network entity and can then transmit configuration information of the vehicle unit to the network entity in a step 202. Hereby, the current configuration of the vehicle unit can be sent to a network entity 20. This in turn can be used to keep track of the current configuration of a vehicle unit 10 of a particular vehicle. For example, a fleet manager can keep track of the current vehicle unit configuration and can also in turn use this configuration for setting the configuration of other vehicle units in the same fleet.

According to another embodiment, the vehicle unit 10 can further be configured to receive updated configuration information of the vehicle unit 10 from the network entity 20 in a step 204. The configuration of the vehicle unit 10 can then be updated in a step 206 based on the received configuration information from the network entity 20. Hereby, the vehicle unit can be remotely updated.

For example, if a fleet manager determines that a particular configuration of a vehicle unit is more suitable at a particular time, the vehicle unit 10 can be reconfigured remotely without having to enter a local workshop. This can save time and also makes it possible to update a plurality of vehicle units 10 all at the same time. Further, because the vehicle unit 10 can be updated remotely it is more feasible to perform updates more frequently than if the vehicle needs to go to a work shop each time there is a need or desire to update the configuration of the vehicle unit 10.

In accordance with some embodiments the vehicle unit 10 is a tachograph. However, the vehicle unit can also be some other on-board recording device such as a road toll paying device or a similar device used to record on-board activities of a vehicle.

According to another embodiment, typically, the configuration information of the vehicle unit 10 can comprise settings such as recording frequency, displaying sequence, and/or user configuration and other parameter settings of a tachograph or similar device.

In accordance with one embodiment, the vehicle unit 10 can be configured to receiving updated configuration information of the vehicle unit 10 from a local device 30 in a step 208. For example, a vehicle can go to a workshop and get the vehicle updated by download of a new configuration information at the workshop. The received new configuration can be used to update the configuration of the vehicle unit 10 based on the received configuration information in a step 210. Further, the new updated configuration information can be transmitted to the network entity 20 in a step 212.

By performing the steps 208-212, a vehicle receiving updated configuration information from a local device 30 can send the new, updated, configuration information to a network entity 20. Hereby, the network entity can receive the new updated configuration information and can keep track of the new configuration information. Moreover, the network entity 20 will then be enabled to share the new, updated, configuration information with other vehicle unit with which the network entity 20 can connect to. Hereby, for example, only one vehicle of a fleet of vehicle need to get an update at a workshop. Other vehicles of the same fleet can be updated via the network entity 20.

According to another embodiment, a vehicle unit 10 communicatively connectable to a network entity 20, wherein, the vehicle unit 10 comprises a processing circuitry 403 and a memory 404, the memory 404 containing instructions executable by the processing circuitry 403, whereby the vehicle unit 10 is operative for: transmitting configuration information of the vehicle unit 10 to the network entity 20.

According to another embodiment, the vehicle unit 10 is further operative for: receiving updated configuration information of the vehicle unit 10 from the network entity 20; and updating the configuration of the vehicle unit 10 based on the received configuration information.

According to another embodiment, the vehicle unit 10 is a tachograph.

According to another embodiment, the configuration information of the vehicle unit 10 comprises recording frequency, displaying sequence, and/or user configuration.

According to another embodiment, the vehicle unit 10 is further operative for: receiving updated configuration information of the vehicle unit 10 from a local device 30; updating the configuration of the vehicle unit 10 based on the received configuration information; transmitting the updated configuration information to the network entity 20.

According to another embodiment, a vehicle 500 is provided, the vehicle 500 comprises at least one vehicle unit 10 according to any one of the preceding embodiments.

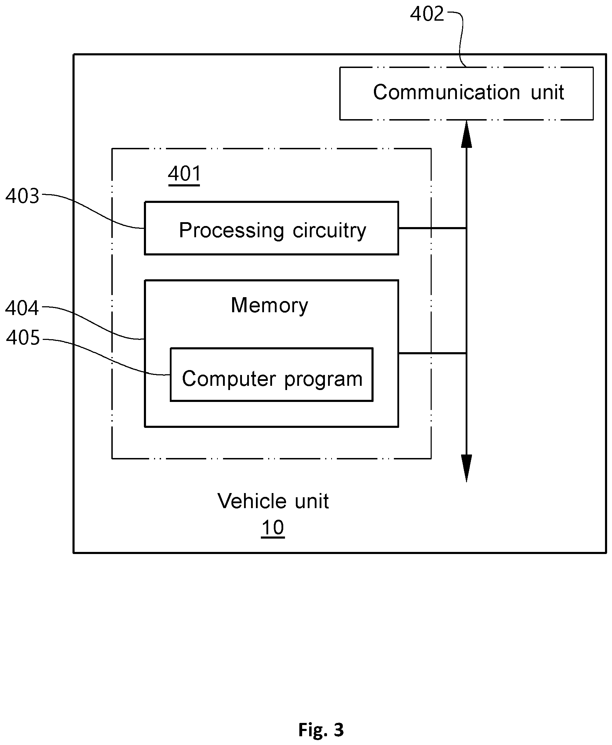

According to other embodiments, referring to fig. 3, the vehicle unit 10 may further comprise a communication unit 402, which may be considered to comprise conventional means for wireless or wireline communication with other devices, such as a transceiver for wireless transmission and reception of signals. The instructions executable by said processing circuitry 403 may be arranged as a computer program 405 stored e.g., in said memory 404. The processing circuitry 403 and the memory 404 may be arranged in a sub-arrangement 401. The sub-arrangement 401 may be a micro-processor and adequate software and storage therefore, a Programmable Logic Device, PLD, or other electronic component(s)/processing circuits) configured to perform the methods mentioned above. The processing circuitry 403 may comprise one or more programmable processor, application-specific integrated circuits, field programmable gate arrays or combinations of these adapted to execute instructions.

The computer program 405 may be arranged such that when its instructions are run in the processing circuitry, they cause the vehicle unit 10 to perform the steps described in any of the described embodiments of the vehicle unit 10 and its method. The computer program 405 may be carried by a computer program product connectable to the processing circuitry 403. The computer program product may be the memory 404, or at least arranged in the memory. The memory 404 may be realized as for example a RAM (Random-access memory), ROM (Read-Only Memory) or an EEPROM (Electrical Erasable Programmable ROM). In some embodiments, a carrier may contain the computer program 405. The carrier may be one of an electronic signal, an optical signal, an electromagnetic signal, a magnetic signal, an electric signal, a radio signal, a microwave signal, or computer readable storage medium. The computer-readable storage medium may be e.g., a CD, DVD or flash memory, from which the program could be downloaded into the memory 404. Alternatively, the computer program may be stored on a server or any other entity to which the vehicle unit 10 has access via the communication unit 402. The computer program 405 may then be downloaded from the server into the memory 404.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Further, the term "a number of", such as in "a number of wireless devices" signifies one or more devices. All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a vehicle unit (10), the vehicle unit (10) is communicatively connected to a network entity (20), the method comprises:
transmitting (202) configuration information of the vehicle unit (10) to the network entity (20).

2. The method as claimed in claim 1, the method further comprises:
receiving (204) updated configuration information of the vehicle unit (10) from the network entity (20);
updating (206) the configuration of the vehicle unit (10) based on the received configuration information.

3. The method as claimed in claims 1 or 2, the vehicle unit (10) is a tachograph.

4. The method as claimed in any one of the preceding claims, the configuration information of the vehicle unit (10) comprises recording configuration, displaying configuration, and/or user configuration.

5. The method as claimed in any one of the preceding claims, the method further comprises:
receiving (208) updated configuration information of the vehicle unit (10) from a local device (30);
updating (210) the configuration of the vehicle unit (10) based on the received configuration information;
transmitting (212) the updated configuration information to the network entity (20).

6. A vehicle unit (10) communicatively connectable to a network entity (20), wherein, the vehicle unit (10) comprises a processing circuitry (403) and a memory (404), the memory (404) containing instructions executable by the processing circuitry (403), whereby the vehicle unit (10) is operative for:
transmitting configuration information of the vehicle unit (10) to the network entity (20).

7. The vehicle unit (10) according to claim 6, the vehicle unit (10) is further operative for:
receiving updated configuration information of the vehicle unit (10) from the network entity (20); and
updating the configuration of the vehicle unit (10) based on the received configuration information.

8. The vehicle unit (10) according to claims 6 or 7, the vehicle unit (10) is a tachograph.

9. The vehicle unit (10) according to any one of the claims 6-8, the configuration information of the vehicle unit (10) comprises recording configuration, displaying configuration, and/or user configuration.

10. The vehicle unit (10) according to any one of the claims 6-9, the vehicle unit (10) is further operative for:
receiving updated configuration information of the vehicle unit (10) from a local device (30);
updating the configuration of the vehicle unit (10) based on the received configuration information;
transmitting the updated configuration information to the network entity (20).

11. A computer program (405) comprising instructions, which, when executed by a processing circuitry (403) of a vehicle unit (10), causes the vehicle unit (10) to perform the method according to any of the claims 1-5.

12. A carrier containing the computer program (405) according to claim 11, wherein the carrier is one of an electronic signal, an optical signal, a radio signal, an electric signal, or a computer readable storage medium.

13. A vehicle (500), comprising at least one vehicle unit (10) according to any one of the preceding claims 6-10.
